# EUROPEAN PATENT APPLICATION

(11) **EP 1 213 093 A1**
(43) Date of publication of application: **12.06.2002**
(21) Application number: 01129120.0
(22) Date of filing: 07.12.2001
(51) Int. Cl.: B23Q 11/10

(54) **Machining method and mist supplying apparatus for use in the method**

(30) Priority: 07.12.2000 JP 2000373430
(71) Applicant: ECOREG LTD., Osaka-shi, Osaka 531-0072 (JP)
(72) Inventor: Hara, Mitsugu, Kishiwada-shi, Osaka 596-0827 (JP)
(74) Representative: Frankland, Nigel Howard

(57) **Abstract**

A machining method in which cooling and lubrication of a machining part is achieved by supplying a liquid in a mist form to eliminate problems associated with cooling by direct liquid supply, and homogeneous mixing of the liquid and air is ensured even if a rotation shaft of a machine tool is utilized for the liquid supply. The machining method comprises the steps of: providing a machine tool which includes a rotation shaft (5) having a through-hole (15) longitudinally extending therethrough; separately supplying compressed air and a liquid into the through-hole (15); causing the compressed air and the liquid to separately flow through the through-hole (15); mixing the liquid with the compressed air in the through-hole (15) so as to form the liquid into a mist; causing the resulting mist to flow out of a distal end portion of the through-hole (15) into a tool fixed to the distal end portion of the through-hole (15); and machining a workpiece while ejecting the mist from a distal end of the tool to supply the mist to a machining part.

## Description

### BACKGROUND OF THE INVENTION

### Field of the Invention

The present invention relates to a method for performing machining operations on a workpiece such as cutting and grinding operations, and to a mist supplying apparatus for use in the method.

### Description of the Art

In a machining operation such as a cutting or grinding operation, it is a conventional practice to directly supply a liquid to a machining part from a liquid supply nozzle extending thereto, the liquid dissipating heat generated by contact between a workpiece and a machining tool. when a large-scale vertical machine tool such as a machining center is employed for the machining operation, however, the liquid and generated debris are liable to accumulate in a machined recess, thereby deteriorating the machining performance. When the workpiece is cut by intermittently bringing tool such as a cemented carbide tool into contact with the workpiece, the machining point of a cutting edge of the tool is heated to a high temperature and while the other portion thereof is cooled by the supplied liquid. The repeated thermal shock due to rapid heating and/or cooling may cause the cutting edge to chip (a so-called chipping phenomenon) or to crack.

A recent approach to this problem is to supply the liquid in a mist form to the workpiece and to the tool for cooling thereof. Unlike the aforesaid direct liquid supply, this approach tends to be free from the accumulation of the liquid in a machined recess and also tends to avoid the chipping phenomenon due to sudden cooling.

Another approach is to utilize a spindle of a machine tool for supplying a coolant to a machining part. In a tool mounting device as disclosed in Japanese Unexamined Patent Publication No. 10-29131 (1998) and as shown in Fig. 8, for example, a coolant supplied through a rotary joint 51 from a coolant supply source flows through a coolant channel (not shown) vertically extending through a drawbar 53 within a spindle 52, a coolant channel (not shown) vertically extending through a tool holder 54, and a coolant channel vertically extending through a tool (not shown), and then is ejected from a distal end of the tool.

when the coolant employed in this device is in a liquid form, however, the accumulation of the liquid in a machined recess and the chipping phenomenon may occur as described above. When the coolant is in a mist form, on the other hand, a liquid component of the coolant (which has a greater specific gravity than a gaseous component of the coolant) tends to be forced toward the circumference of the drawbar 53 by a centrifugal force generated by high speed rotation of the drawbar when the coolant flows through the coolant channel within the drawbar. Therefore, the machining part cannot evenly be cooled or lubricated.

In view of the foregoing, it is an object of the present invention to provide a machining method and a mist supplying apparatus for use in the method, which can eliminate the problems associated with the direct liquid supply by ejection of a liquid in a mist form, and ensure homogeneous mixing of the liquid and air even with a construction utilizing a spindle of a machine tool.

### SUMMARY OF THE INVENTION

In accordance with a first aspect of the present invention to achieve the aforesaid object, there is provided a machining method, which comprises the steps of: providing a machine tool which includes a rotation shaft having a through-hole longitudinally extending therethrough; separately supplying compressed air and a liquid into the through-hole; causing the compressed air and the liquid to separately flow through the through-hole; mixing the liquid with the compressed air in the through-hole so as to form the liquid into a mist; causing the resulting mist to flow out of a distal end portion of the through-hole into a tool fixed to the distal end portion of the through-hole; and machining a workpiece while ejecting the mist from a distal end of the tool to supply the mist to a machining part.

In accordance with a second aspect of the present invention, there is provided a mist supplying apparatus, which comprises: a casing; a rotation shaft rotatably supported within the casing and having a through-hole longitudinally extending therethrough; a tool detachably fixed to a distal end portion of the through-hole and having a channel extending therethrough; a compressed air channel and a liquid channel separately provided in the through-hole, the compressed air channel being supplied with compressed air, the liquid channel being supplied with a liquid, whereby the liquid ejected from the liquid channel is formed into a mist by the compressed air supplied into the compressed air channel within the through-hole, and the resulting mist is supplied through the channel of the tool so as to be ejected from a distal end of the tool.

In the machining method according to the present invention, the machine tool provided includes the rotation shaft having the through-hole extending longitudinally therethrough, and the compressed air and the liquid are separately supplied into the through-hole and allowed to separately flow through the through-hole while the workpiece is being machined. when the compressed air and the liquid flow in an unmixed state through the through-hole of the rotation shaft rotating at a high speed, the centrifugal force generated by the high speed rotation may influence the compressed air and the liquid, but the mixing of the compressed air and the liquid thereafter carried out is not adversely affected. In addition, the liquid is mixed with the compressed air in the through-hole so as to be formed into a mist. Then, the resulting mist flows out of the distal end portion of the through-hole into the tool fixed to the distal end portion of the through-hole. While the mist is ejected from the distal end of the tool toward a machining part, the machining operation is performed. By thus supplying the liquid in a mist form to the machining part, the accumulation of the liquid in a machined recess and the chipping phenomenon due to sudden cooling can be avoided which may otherwise occur in the case of the direct liquid supply. On the other hand, the mist supplying apparatus according to the present invention provides the same function and effect as the inventive machining method. In the present invention, the distal end portion of the through-hole is intended to include a distal end portion of the through-hole formed in the rotation shaft in a narrower sense and, where a tool holder is fitted in the through-hole of the rotation shaft and formed with a through-hole connected in series to the through-hole of the rotation shaft, further include a distal end portion of the through-hole of the tool holder ( in which the tool is fitted so as to be held by the tool holder). The term "machining part" herein means, for example, a surface of the tool involved in the machining operation and a surface of the workpiece being machined.

when a mixture of a cooling liquid and a cutting liquid is supplied as the liquid into the through-hole in the inventive machining method, a cooling effect and a lubricating effect can simultaneously be provided to the machining part. When the inventive mist supplying apparatus is adapted to supply a mixture of a cooling liquid and a cutting liquid into the liquid channel, the same function and effect can be ensured.

When the cooling liquid and the cutting liquid are separately supplied as the liquid into the through-hole and allowed to separately flow through the through-hole in the inventive machining method, the cooling liquid and the cutting liquid are not mixed until these liquids pass through the through-hole, so that any degradation in the quality of these liquids is suppressed. In addition, the cooling liquid and the cutting liquid are formed into a mist and then mixed with each other in the through-hole. Thus, the mixing of the cooling liquid and the cutting liquid is sufficiently carried out, thereby providing excellent cooling and lubricating effects, when a cooling liquid channel and a cutting liquid channel are separately provided as the liquid channel and a cooling liquid supply channel for supplying the cooling liquid to the cooling liquid channel from cooling liquid supply means and a cutting liquid supply channel for supplying the cutting liquid to the cutting liquid channel from cutting liquid supply means are separately provided in the inventive mist supplying apparatus, the same function and effect can be ensured.

### BRIEF DESCRIPTION OF THE DRAWINGS

Fig. 1 is an explanatory diagram illustrating a mist supplying apparatus according to one embodiment of the present invention;
Fig. 2 is a sectional view of a tool holder;
Fig. 3 is a sectional view of a major portion of the mist supplying apparatus;
Fig. 4 is a sectional view of a first rotary seal;
Fig. 5 is a sectional view of a second rotary seal;
Fig. 6 is a sectional view for explaining the function of the mist supplying apparatus;
Fig. 7 is an explanatory diagram illustrating two inlet tubes; and

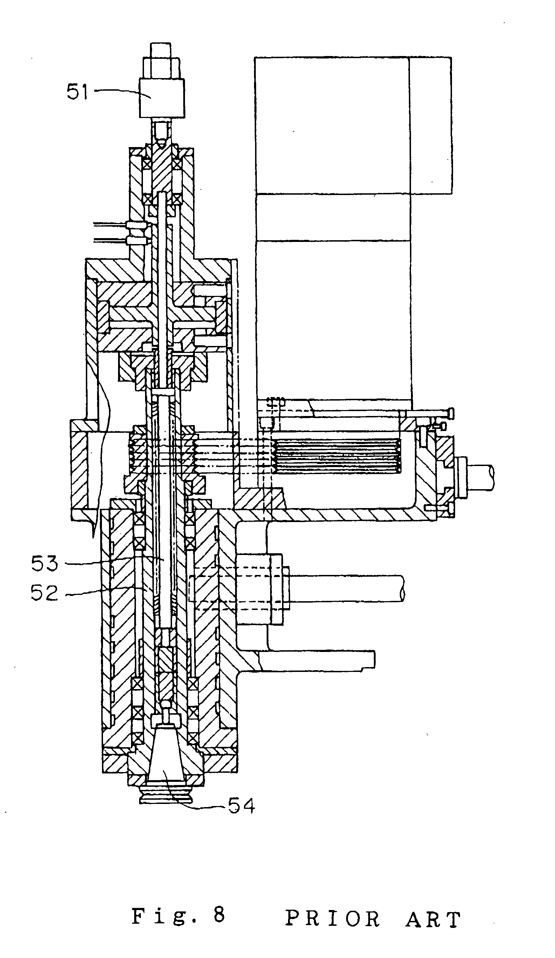

Fig. 8 is an explanatory diagram of the prior art.

### DETAILED DESCRIPTION OF PREFERRED EMBODIMENT

An embodiment of the present invention will hereinafter be described in detail with reference to the attached drawings.

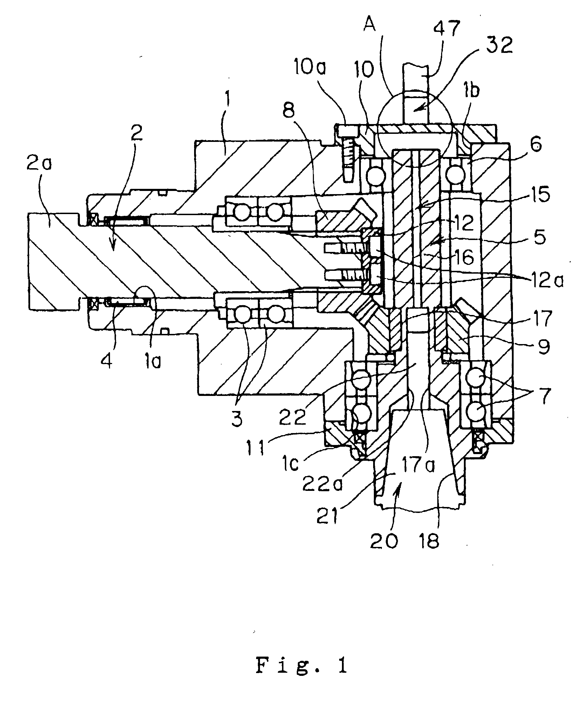

Fig. 1 illustrates a mist supplying apparatus according to one embodiment of the present invention. As shown in Fig. 1, a connection shaft 2 is horizontally disposed in a cylindrical casing 1, and rotatably supported in the cylindrical casing by left and right bearings 3, 4. A horizontal hole 1a (in which the bearing 4 is fixed) is formed in one side wall (a left side wall in Fig. 1) of the casing 1, and one end portion 2a (a left end portion in Fig. 1) of the connection shaft 2 extends to the exterior of the casing through the horizontal hole 1a and is coupled to rotation means (not shown) such as a motor via coupling means (not shown) such as a belt. A rotation shaft 5 is vertically disposed in the casing 1, and rotatably supported by upper and lower bearings 6, 7. A pair of bevel gears 8, 9 mesh with each other so as to transmit the rotation of the connection shaft 2 to the rotation shaft. The bevel gear 8 is fixed around the other end portion (a right end portion) of the connection shaft 2, and the bevel gear 9 is fixed to a midportion of the rotation shaft 5.

An upper hole 1b (in which the bearing 6 is fixed) is formed in an upper wall of the casing 1, and an upper cap 10 is fixed to the upper wall by a plurality of fixing bolts 10a (only one of which is seen in Fig. 1) to cover the upper hole. A lower hole 1c (in which the bearings 7 are fixed) is formed in a lower wall of the casing 1, and a lower cap 11 is fixed to the lower wall by a plurality of fixing bolts (not shown) to cover the lower hole. A fixture plate 12 is fixed to the other end of the connection shaft 2 by a plurality of fixing bolts 12a (only two of which are seen in Fig. 1) for fixing the bevel gear 8 to the other end of the connection shaft.

The rotation shaft 5 has a through-hole 15 extending axially therethrough. The through-hole 15 includes an upper hole portion 16 extending from an upper end face of the rotation shaft 5, an intermediate hole portion 17 having a threaded portion 17a provided on an inner peripheral surface thereof, and a lower hole portion (chuck portion )18 extending to a lower end face of the rotation shaft and flared downward.

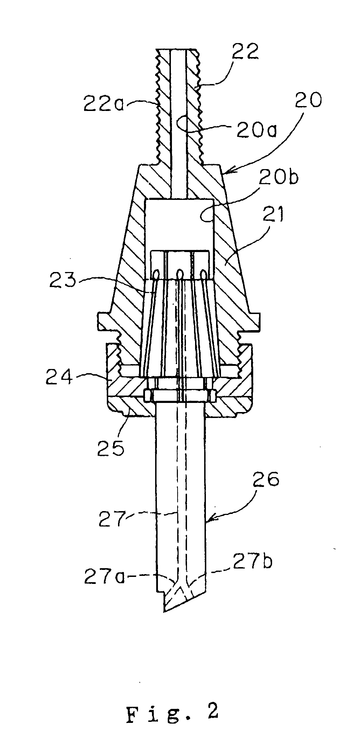

A tool holder 20 includes a main portion 21 removably inserted in the lower hole portion 18 of the through-hole 15 of the rotation shaft 5, and a connection rod 22 (see Fig. 2) extending upright from an upper end face of the main portion. The connection rod 22 has a threaded portion 22a provided on an outer peripheral surface thereof and threadingly engaged with the threaded portion 17a of the intermediate hole portion 17 of the through-hole 15. The tool holder 20 has a through-hole extending axially therethrough and including an upper small-diameter portion 20a extending through the connection rod 22 and a lower large-diameter portion 20b extending through the main portion 21 from a lower end face of the main portion. The connection rod 22 of the tool holder 20 threadingly engages the intermediate hole portion 17 of the rotation shaft 5, so that the upper hole portion 16, an upper portion of the intermediate hole portion 17 and the through-hole of the tool holder 20 are connected in series with the main portion 21 being inserted in the lower hole portion 18 of the rotation shaft. With an upper portion of a tool 26 being fitted in the lower large-diameter portion 20b of the through-hole of the tool holder 20, the tool is detachably fixed to a lower end of the tool holder by a collet 23, a clamp nut 24 and a cap 25.

The tool 26 has a bifurcated channel 27 extending downward from an upper end thereof with one branch channel 27a opening into a rake face of the tool and with the other branch channel 27b opening into a flank of the tool. A minute gap which permits passage of a mist mixture, as will be described later, is defined between an outer peripheral surface of the tool 26 and inner peripheral surfaces of the collet 23 and the cap 25.

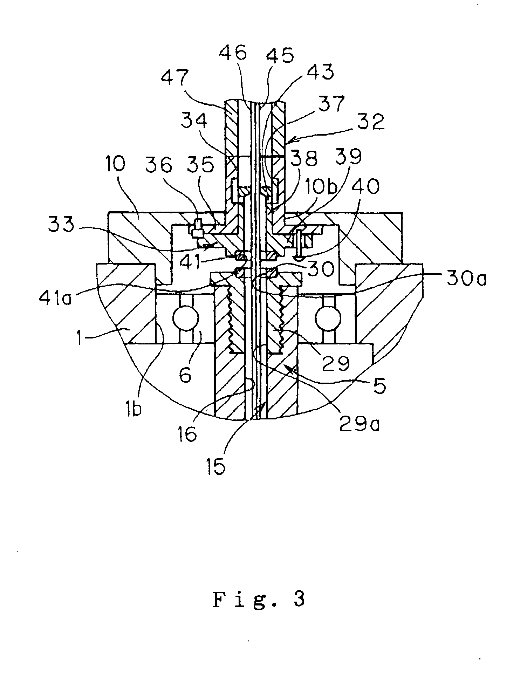

The upper end of the rotation shaft 5 and a portion of the upper cap 10 opposed thereto are provided with ceramic seals 30 and 41, respectively (see a circled portion indicated by A in Fig. 1 and see Fig. 3 for a detailed construction). More specifically, a nut 29 having the ceramic seal 30 fixed to an upper end face thereof is threadingly fixed in an upper end portion of the rotation shaft 5, and the seal 30 of the nut 29 is brought into contact with and away from the seal 41 of a second rotary seal 33 to be described later. The nut 29 has a center through-hole 29a extending therethrough axially of the rotation shaft 5, and the seal 30 has a center through-hole 30a in alignment with the center through-hole.

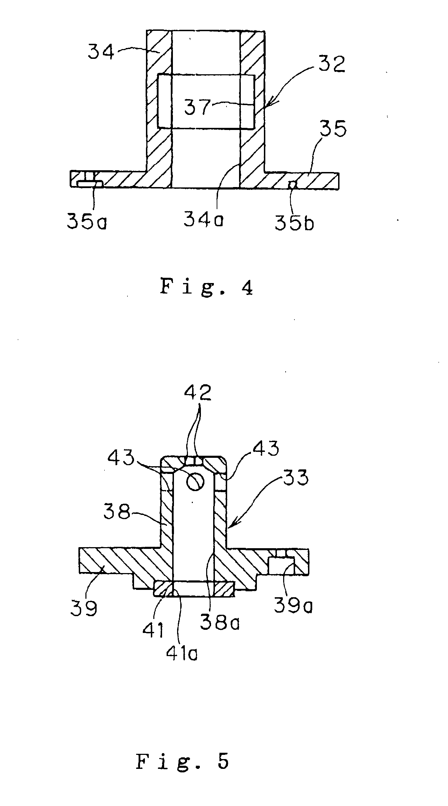

On the other hand, a through-hole 10b is formed in the portion of the upper cap 10 opposed to the seal 30, and first and second rotary seals 32, 33 are provided in the through-hole. As shown in Fig. 4, the first rotary seal 32 includes a tubular portion 34 fitted in the through-hole 10b of the upper cap 10 and a flange 35 projecting from a lower end peripheral portion of the tubular portion. The flange 35 is fixed to the cap 10 by a bolt 36. A center through-hole 34a of the tubular portion 34 has a single annular recess 37 formed in a midportion thereof. In Fig. 4, a bolt insertion hole 35a is formed in the flange 35 of the first rotary seal 32 for receiving the bolt 36.

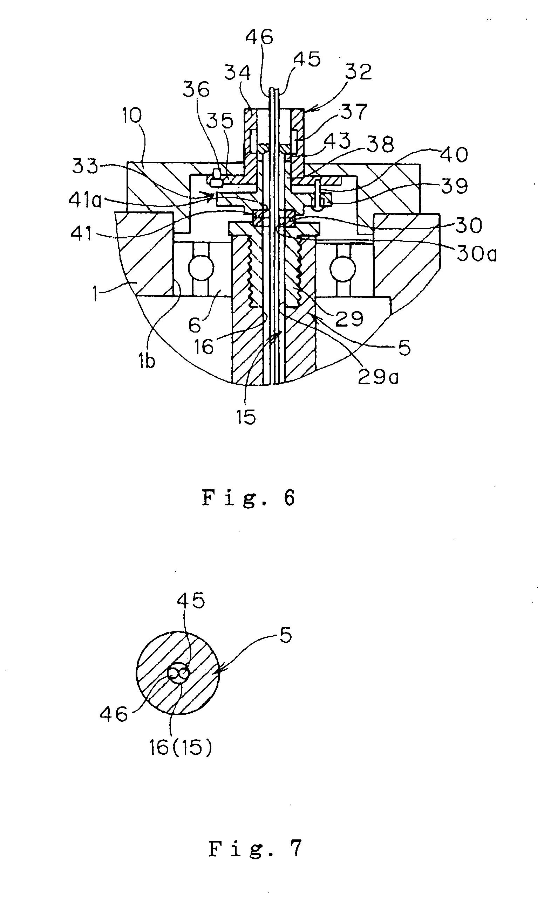

As shown in Fig. 5, the second rotary seal 33 includes a topped cylindrical portion 38 provided in the center through-hole 34a of the tubular portion 34 of the first rotary seal 32 in a vertically slidable manner and a flange 39 provided around a lower peripheral portion of the topped cylindrical portion. The flange 39 is formed with four bolt insertion holes 39a (only one of which is seen in Fig. 5) in which bolts 40 (see Fig. 3) are inserted. These bolt insertion holes 39a each have a greater diameter than threaded portions of the bolts 40. The flange 35 of the first rotary seal 32 has threaded holes 35b (only one of which is seen Fig. 4) which are respectively formed therein in alignment with the bolt insertion holes 39a so as to be brought into threading engagement with the bolts 40. The threaded portions of the bolts 40 each have a projection length which is greater than the thickness of the flange 39 of the second rotary seal 33 with the bolts being respectively fitted in the threaded holes 35b. With this arrangement, the second rotary seal 33 is attached to the first rotary seal 32 in a vertically movable manner. Thus, the second rotary seal 33 can be moved down along the bolts 40 thereby to be brought into a state of abutment (see Fig. 6) where the seal 41 fixed to the lower end face of the second rotary seal 33 abuts against the seal 30 fixed to the upper end face of the nut 29, and then moved up along the bolts thereby to be brought out of the state of abutment into a spaced state (see Fig. 3) where the seals 30 and 41 are spaced from each other.

The ceramic seal 41 is fixed to the lower end face of the second rotary seal 33, and a center through-hole 41a is formed in the seal 41 in alignment with a center through-hole 38a of the topped cylindrical portion 38 of the second rotary seal 33. The topped cylindrical portion 38 has two vertical holes 42 formed in a central portion of a top wall thereof, and four lateral holes 43 (one of which is not seen in Fig. 5) formed in an upper peripheral portion thereof. A cooling water inlet tube 45 is inserted in one of the vertical holes 42, and a cutting liquid inlet tube 46 is inserted in the other vertical hole (see Fig. 7). In Fig. 1, the inlet tubes 45, 46 are not shown. The inlet tubes 45, 46 extend through the through-hole 15 of the rotation shaft 5 to the vicinity of the lower end of the upper hole portion 16 of the through-hole 15.

More specifically, the inlet tubes 45, 46 extend through the center through-hole 34a of the first rotary seal 32, the respective vertical holes 42 of the topped cylindrical portion 38 of the second rotary seal 33, the center through-hole 38a of the topped cylindrical portion 38, the center through-hole 41a of the seal 41, the center through-hole 30a of the seal 30 and the center through-hole 29a of the nut 29 to the vicinity of the lower end of the upper hole portion 16.

Upper end portions of the inlet tubes 45, 46 project upward from the center through-hole 34a of the first rotary seal 32. The cooling water inlet tube 45 is connected to cooling water supply means (not shown) including a cooling water tank containing a cooling water (e.g., tap water), a pump and the like via a cooling water supply pipe (not shown), and is adapted to be supplied with the cooling water from the cooling water supply means under a predetermined pressure. On the other hand, the cutting liquid inlet tube 46 is connected to cutting liquid supply means (not shown) including a cutting liquid tank containing a cutting liquid (e.g., Bluebe #LB-1 available from US ITW Corporation), a pump and the like via a cutting liquid supply pipe (not shown), and is adapted to be supplied with the cutting liquid from the cutting liquid supply means under a predetermined pressure. The center through-hole 34a of the first rotary seal 32 is connected to compressed air supply means (not shown) including a compressor and the like via a compressed air supply pipe 47 (see Fig. 3), and is adapted to be supplied with compressed air (containing a very small amount of a lubricating oil) from the compressed air supply means under a predetermined pressure.

Upon actuation of the motor, the connection shaft 2 starts rotating which starts the rotation of the notation shaft 5, whereby circular streams are generated on the upper end of the rotation shaft. The circular streams generate an upward thrust to force the second rotary seal upward. Thus, the second rotary seal 33 starts moving upward. This brings the annular recess 37 of the tubular portion 34 of the first rotary seal 32 into communication with the respective lateral holes 43 of the topped cylindrical portion 38 of the second rotary seal 33, whereby the compressed air supplied from the compressed air supply means flows into the center through-hole 38a of the topped cylindrical portion 38 of the second rotary seal via the annular recess and the lateral holes. At this time, the distance of the upward movement of the second rotary seal 33 increases as the rotation speed of the rotation shaft 5 increases. Therefore, an effective area for the communication between the annular recess 37 and the respective lateral holes 43 increases as the rotation speed of the rotation shaft 5 increases. Accordingly, the amount of the compressed air flowing into the center through-hole 38a of the topped cylindrical portion 38 increases. Thus, the compressed air flowing into the center through-hole 38a of the topped cylindrical portion 38 further flows through the center through-hole 41a of the seal 41, the center through-hole 30a of the seal 30 and the center through-hole 29a of the nut 29 to the vicinity of the lower end of the upper hole portion 16 of the rotation shaft 5.

When the compressed air flows into the center through-hole 30a of the seal 30 from the center through-hole 41a of the seal 41, the seals 30 and 41 are spaced from each other, so that the compressed air leaks into a gap between the seals 30 and 41 to produce an air joint effect. In addition, the lubricating oil contained in the compressed air leaking into the gap prevents seizure of the seals 30, 41. On the other hand, when the motor is deactuated, the rotation of the rotation shaft 5 is stopped, so that the circular streams are no longer generated. Therefore, the second rotary seal 33 is moved down by gravity. Thus, the second rotary seal 33 is brought into the state of abutment with the lower end face thereof abutting against the upper end face of the nut 29 (i.e., with the seals 30, 41 abutting against each other), whereby the annular recess 37 is brought out of communication with the respective lateral holes 43.

With the aforesaid arrangement, the compressed air is supplied into the center through-hole 34a of the first rotary seal 32, and the cooling water and the cutting liquid are supplied into the cooling water inlet tube 45 and into the cutting liquid inlet tube 46, respectively, upon the actuation of the motor. Then, the cooling water and the cutting liquid are ejected from the cooling water inlet tube 45 and from the cutting liquid inlet tube 46, respectively, in the vicinity of the lower end of the upper hole portion 16 of the rotation shaft 5. At the same time, the cooling water and the cutting liquid are atomized into a mist form by the compressed air supplied into the center through-hole 34a of the first rotary seal 32, and mixed with each other. The resulting mist mixture flows out of the upper hole portion 16 of the rotation shaft 5, and then flows through the intermediate hole portion 17 and the through-hole 20c (the upper small-diameter portion 20a and the lower great-diameter portion 20b) of the tool holder 21. Most of the mist mixture flows into the channel 27 of the tool 26 so as to be ejected to the rake face of the tool 26 from the one branch channel 27a and to the flank of the tool 26 from the other branch channel 27b. The rest of the mist mixture (which has not flowed into the channel 27 of the tool 26) flows into the gap between the outer peripheral surface of the tool 26 and the inner peripheral surfaces of the collet 23 and the cap 25, and then is ejected from the gap along the outer periphery of the tool 26.

In this embodiment, the cooling water and the cutting liquid are allowed to separately flow in a unmixed liquid state through the inside of the rotation shaft 5 rotating at a high speed as described above, so that the cooling water and the cutting liquid can thereafter be mixed homogeneously. Since the cooling water and the cutting liquid are mixed immediately before reaching the tool holder 20, the cooling water and the cutting liquid are kept in a mixed state for a shorter period of time. This suppresses the deterioration of the cutting liquid. In addition, the cooling water and the cutting liquid are mixed in a mist form and, therefore, the mixing is sufficient to ensure excellent cooling and lubricating effects. Since the tool is not subjected to sudden cooling, unlike in the case of the direct liquid supply, intermittent thermal shock can be eliminated. Therefore, the life of the tool can advantageously be extended significantly. Further, the mist mixture is ejected from the minute gap between the outer peripheral surface of the tool 26 and the inner peripheral surfaces of the collet 23 and the cap 25 along the outer periphery of the tool 26. This makes it possible to protect a shoulder of the tool 26 (e.g., a drill). Further, ejection pressures of the compressed air, the cooling water and the cutting liquid can advantageously be varied according to machining conditions.

Although the cooling water inlet tube 45 and the cutting liquid inlet tube 46 are separately provided inside the rotation shaft 5 in the aforesaid embodiment, the arrangement for the supply of the cooling water and the cutting liquid is not limited thereto. A single inlet tube may be provided in the rotation shaft 5, so that a mixture of the cooling water and the cutting liquid can be supplied into the inlet tube. In addition to the cooling water inlet tube 45 and the cutting liquid inlet tube 46, a compressed air inlet tube may be provided inside the rotation shaft 5. Although the tool 26 to be employed is formed with the channel 27 and the branch channels 27a, 27b in the aforesaid embodiment, a tool formed with neither the channel nor the branch channels 27a, 27b may be employed. In this case, only the portion of the mist mixture ejected from the minute gap between the outer peripheral surface of the tool 26 and the inner peripheral surfaces of the collet 23 and the cap 25 along the outer periphery of the tool 26 is supplied to the machining part.

Since the cooling effect and the lubricating effect significantly vary depending on the type of the mist, it is preferred to control the mixing ratio between the cooling water and the cutting liquid by variably controlling the amounts of the cooling water and the cutting liquid respectively introduced into the cooling water inlet tube 45 and the cutting liquid inlet tube 46, and to control the pressures of the compressed air, the cooling water and the cutting liquid respectively supplied into the center through-hole 34a of the first rotary seal 32, the cooling water inlet tube 45 and the cutting liquid inlet tube 46. In a high speed cutting operation, for example, the amount of the cooling water supplied is increased to increase the ratio of the cooling water to the cutting liquid to enhance the cooling effect. In a low or intermediate speed cutting operation, the amount of the cutting liquid supplied is increased to increase the ratio of the cutting liquid to enhance the lubricating effect.

Although tap water is employed as the cooling water in the aforesaid embodiment, the cooling water is not limited thereto, and other examples thereof include pure water and ultra-pure water. In the aforesaid embodiment, Bluebe #LB-1 is employed as the cutting liquid, but the cutting liquid is not limited thereto. Any of various ordinary cutting liquids may be employed. Although the cooling water and the cutting liquid are employed as the liquid in the aforesaid embodiment, the liquid may be selected from various types of liquids such as emulsions and chemical agents.

The apparatus according to the present invention can be installed, not only in the machining center for machining as in the aforesaid embodiment but also in various machine tools such as numerically controlled (NC) lathes and grinding machines.

In the machining method according to the present invention, the machine tool provided includes the rotation shaft having the through-hole extending longitudinally therethrough, and the compressed air and the liquid are separately supplied into the through-hole and allowed to separately flow through the through-hole when the workpiece is machined. When the compressed air and the liquid flow in an unmixed state through the through-hole of the rotation shaft rotating at a high speed, the centrifugal force generated by the high speed rotation may influence the compressed air and the liquid, but the mixing of the compressed air and the liquid thereafter carried out is not adversely affected. In addition, the liquid is mixed with the compressed air in the through-hole so as to be formed into a mist. Then, the resulting mist flows out of the distal end portion of the through-hole into the tool fixed to the distal end portion of the through-hole. while the mist is ejected from the distal end of the tool toward the machining part, the machining operation is performed. By thus supplying the liquid in a mist form to the machining part, the accumulation of the liquid in a machined recess and the occurrence of the chipping phenomenon due to the sudden cooling can be avoided which may otherwise occur in the case of a direct liquid supply. On the other hand, the mist supplying apparatus according to the present invention provides the same function and effect as the inventive machining method.

When the mixture of a cooling liquid and a cutting liquid is supplied as the liquid into the through-hole in the inventive machining method, the cooling effect and the lubricating effect simultaneously can be provided to the machining part. When the inventive mist supplying apparatus is adapted to supply the mixture of the cooling liquid and the cutting liquid into the liquid channel, the same function and effect can be ensured.

When the cooling liquid and the cutting liquid are separately supplied as the liquid into the through-hole and allowed to separately flow through the through-hole in the inventive machining method, the cooling liquid and the cutting liquid are not mixed until these liquids pass through the through-hole, so that degradation in the quality of these liquids is suppressed. In addition, the cooling liquid and the cutting liquid are formed into a mist and then mixed with each other in the through-hole. Thus, the mixing of the cooling liquid and the cutting liquid is sufficient, thereby providing excellent cooling and lubricating effects. when the cooling liquid channel and the cutting liquid channel are separately provided as the liquid channel and the cooling liquid supply channel for supplying the cooling liquid to the cooling liquid channel from the cooling liquid supply means and the cutting liquid supply channel for supplying the cutting liquid to the cutting liquid channel from cutting liquid supply means are separately provided in the inventive mist supplying apparatus, the same function and effect can be ensured.
The features disclosed in the foregoing description, in the claims and / or in the accompanying drawings may, both separately and in any combination thereof, be material for realising the invention in diverse forms thereof.

## Claims

1. A machining method comprising the steps of:
providing a machine tool which includes a rotation shaft having a through-hole longitudinally extending therethrough;
separately supplying compressed air and a liquid into the through-hole;
causing the compressed air and the liquid to separately flow through the through-hole;
mixing the liquid with the compressed air in the through-hole so as to form the liquid into a mist;
causing the resulting mist to flow out of a distal end portion of the through-hole into a tool fixed to the distal end portion of the through-hole; and
machining a workpiece while ejecting the mist from a distal end of the tool to supply the mist to a machining part.

2. A machining method as set forth in claim 1, wherein the liquid supplied into the through-hole is a mixture of a cooling liquid and a cutting liquid.

3. A machining method as set forth in claim 1, wherein the liquid supplied into the through-hole is a cooling liquid and a cutting liquid separately supplied and are allowed to separately flow through the through-hole.

4. A mist supplying apparatus comprising:
a casing;
a rotation shaft rotatably supported within the casing and having a through-hole longitudinally extending therethrough;
a tool detachably fixed to a distal end portion of the through-hole and having a channel extending therethrough;
a compressed air channel and a liquid channel separately provided in the through-hole, the compressed air channel being supplied with compressed air, the liquid channel being supplied with a liquid, whereby the liquid ejected from the liquid channel is formed into a mist by the compressed air supplied into the compressed air channel within the through-hole, and the resulting mist is supplied through the channel of the tool so as to be ejected from a distal end of the tool.

5. A mist supplying apparatus as set forth in claim 4, wherein the liquid channel is supplied with a mixture of a cooling liquid and a cutting liquid.

6. A mist supplying apparatus as set forth in claim 4, wherein a cooling liquid channel and a cutting liquid channel are separately provided as the liquid channel, and a cooling liquid supply channel for supplying a cooling liquid to the cooling liquid channel and a cutting liquid supply channel for supplying a cutting liquid to the cutting liquid channel are separately provided.
